# EUROPÄISCHE PATENTSCHRIFT

(11) **EP 1 418 105 B1**
(45) Veröffentlichungstag und Bekanntmachung des Hinweises auf die Patenterteilung: **22.03.2006**
(21) Anmeldenummer: 02102535.8
(22) Anmeldetag: 05.11.2002
(51) Int. Cl.: B60T 8/40, B60T 7/04, G05G 1/14

(54) **Vorrichtung und Verfahren zur Simulation eines Pedalverhaltens**
Device and method to simulate a pedal characteristic
Dispositif et procédé de simulation de la caractéristique d'une pédale

(43) Veröffentlichungstag der Anmeldung: 12.05.2004
(73) Patentinhaber: Ford Global Technologies, LLC, Dearborn, MI 48126 (US)
(72) Erfinder: Augsburg, Klaus, Prof. Dr., 99310 Arnstadt (DE); Trutschel, Ralf, 98693 llmenau (DE)
(74) Vertreter: Drömer, Hans-Carsten

(56) Entgegenhaltungen:
- DE-A- 10 039 670
- DE-A- 10 053 994
- DE-A- 19 832 036
- DE-C- 19 638 102
- US-A- 6 050 653
- US-A- 6 149 247

## Beschreibung

Die Erfindung betrifft eine Vorrichtung zur Simulation eines vorgegebenen Betätigungsverhaltens eines Pedals ("Pedalgefühl"), enthaltend einen Aktuator, mit welchem das Pedal bewegt werden kann, sowie einen Positionssensor für die Position des Pedals. Weiterhin betrifft die Erfindung ein Verfahren zur Simulation eines vorgegebenen Betätigungsverhaltens eines Pedals durch Verstellen der Pedalposition, wobei die Pedalposition sensorisch erfaßt wird.

Die Steuerungsfunktionen der Pedale eines Kraftfahrzeuges werden in zunehmendem Maße durch aktive Betätigungseinrichtungen ausgeführt oder unterstützt. Ein Beispiel hierfür stellen elektrohydraulisch unterstützte Bremssysteme dar, bei welchen die eigentliche Bremskraft nicht mehr von dem Pedaldruck, sondern von einem hydraulischen Druckreservoir erzeugt wird. Um dem Fahrer jedoch das gewohnte Pedalgefühl bei der Betätigung des Pedals zu vermitteln, ist es zum Beispiel aus der WO 00/68056 bekannt, das Pedal mit einem sog. Pedalgefühlssimulator zu verbinden. In dem genannten Dokument ist dies ein unter einer Federkraft stehender, hydraulisch angekoppelter Kolben, welcher vermöge eines steuerbaren Ventils nach Bedarf mit dem Pedal gekoppelt oder hiervon entkoppelt wird.

Aus der US 6 149 247 ist ein elektrohydraulisch unterstütztes Bremssystem bekannt, bei welchem die Position des Bremspedals und der Druck in einem mit dem Bremspedal gekoppelten Hauptzylinder gemessen werden. Ein elektronischer Regler kontrolliert in Abhängigkeit von diesen Messwerten zwei Ventile, über welche der Hauptzylinder selektiv mit einem Niederdruckreservoir bzw. dem Hochdruckreservoir gekoppelt werden kann, um gemäß einer vorgegebenen Kraft-Weg-Charakteristik Gegenkräfte auf das Pedal zu erzeugen.

Elektrohydraulische Bremssysteme, bei welchen die in einem Hauptzylinder auf ein Bremspedal ausgeübte Gegenkraft gemäß einer vorgegebenen Kraft-Weg-Kennlinie über die Ankopplung verschiedener Druckreservoire geregelt wird, sind ferner aus der DE 100 53 994 A1 und der US 6 050 653 bekannt.

Die DE 196 38 102 C2 beschreibt Einrichtungen zur Simulation eines Bremspedalverhaltens, bei welchen das Arbeitsvolumen eines Hauptzylinders über Drosseleinheiten mit einem passiven System gekoppelt ist. Eine aktive Regelung der Pedalposition entsprechend einer vorgegebenen Kraft-Weg-Charakteristik findet nicht statt.

Vor diesem Hintergrund war es eine Aufgabe der vorliegenden Erfindung, einen allgemein in Kraftfahrzeugen einsetzbaren Pedalgefühlssimulator bereitzustellen, welcher in einfacher Weise eine realistische Simulation eines gewünschten vorgegebenen Pedalgefühls erlaubt.

Diese Aufgabe wird durch eine Vorrichtung mit den Merkmalen des Anspruchs 1 sowie durch ein Verfahren mit dem Merkmalen des Anspruchs 9 gelöst. Vorteilhafte Ausgestaltungen sind in den Unteransprüchen enthalten.

Die erfindungsgemäße Vorrichtung zur Simulation eines vorgegebenen Betätigungsverhaltens eines Pedals enthält einen Aktuator, mit weichem das Pedal bewegt werden kann. Weiterhin enthält die Vorrichtung einen Positionssensor, welcher die Messung der aktuellen Pedalposition erlaubt. Die Pedalposition kann dabei z. B. als Wegstrecke oder als Winkel gemessen werden. Die Vorrichtung ist enthält die folgenden Einrichtungen:
- Eine Kraftbestimmungseinheit, welche dahingehend ausgebildet ist, die Pedalkraft zu ermitteln. Unter der Pedalkraft ist dabei die von einem Benutzer auf das Pedal beziehungsweise die Pedalplatte ausgeübte äußere Kraft zu verstehen.
- Eine Sollpositionseinheit, deren Eingang mit der Kraftbestimmungseinheit gekoppelt ist und die dazu eingerichtet ist, die zur jeweiligen Pedalkraft gemäß dem gewünschten Betätigungsverhalten gehörige Sollposition des Pedals festzulegen. Das Betätigungsverhalten eines Pedals läßt sich mathematisch durch eine Kraft-Positions-Kurve beschreiben. Eine derartige gewünschte Kurve ist in der Sollpositionseinheit implementiert.
- Einen Regler, welcher an seiner Eingangsseite mit der Sollpositionseinheit und dem Positionssensor und an seiner Ausgangsseite mit dem Aktuator gekoppelt und dahingehend ausgebildet ist, in einem rückgekoppelten Regelkreis die tatsächliche Position des Pedals der von der Sollpositionseinheit vorgegebenen Sollposition nachzuführen.

Mit der beschriebenen Vorrichtung kann an einem Pedal - wie zum Beispiel dem Bremspedal oder dem Gaspedal eines Kraftfahrzeuges - quasi jedes gewünschte Pedalgefühl realisiert werden. Die jeweilige Charakteristik ist hierzu lediglich über ihre Kraft-Positions-Kurve in der Sollpositionseinheit zu implementieren, wobei die Vorrichtung dann mit Hilfe des Reglers und des Aktuators dafür sorgt, daß das Pedal das gewünschte charakteristische Verhalten zeigt.

Die Vorrichtung weist einen mit dem Pedal gekoppelten Kraftsensor auf, welcher die vom Pedal an angekoppelte Funktionselemente weitergeleitete Kraft messen kann. Insbesondere kann der Kraftsensor in dem Kopplungsglied angeordnet sein, welches den Aktuator mit dem Pedal verbindet, so daß dieser die zwischen Aktuator und Pedal ausgetauschten Kräfte mißt. Im statischen Fall (unbewegtes Pedal) ist die vom Kraftsensor gemessene Kraft der vom Fahrer auf das Pedal ausgeübten Pedalkraft proportional, bei entsprechenden Hebelverhältnissen ist diese sogar genauso groß wie die Pedalkraft. Der Kraftsensor kann wichtige Informationen für die rückgekoppelte Regelung des Pedals liefern.

Die Vorrichtung weist einen mit dem Pedal gekoppelten Beschleunigungssensor auf, welcher die Pedalbeschleunigung mißt, d. h. die zweite Ableitung der Pedalposition nach der Zeit. Es zeigt sich, daß die Pedalbeschleunigung bei dynamischen Vorgängen (bewegtes Pedal) eine Berücksichtigung von Trägheitskräften des Pedalmechanismus erlaubt. Diese sind zwar in der vom Fahrer ausgeübten Pedalkraft spürbar, werden jedoch von nachgeordneten Kraftsensoren nicht erfaßt.

Für die Realisierung des auf das Pedal wirkenden Aktuators kommen verschiedene Möglichkeiten in Frage. Vorzugsweise enthält der Aktuator als krafterzeugendes Element einen Hydraulikzylinder, der durch einen Kolben in ein Arbeitsvolumen und ein Komplementärvolumen unterteilt wird, wobei Letzteres auf der dem Arbeitsvolumen gegenüberliegenden Seite des Kolbens liegt. Das Arbeitsvolumen ist über ein steuerbares Ventil wahlweise mit einem Hochdruckreservoir verbindbar, so daß im Arbeitsvolumen ein Hochdruck erzeugt werden kann. Das Komplementärvolumen ist dagegen ständig oder nur während der Phasen, in denen das Arbeitsvolumen mit dem Hochdruckreservoir gekoppelt ist, mit einem Niederdruckreservoir gekoppelt. Durch eine entsprechende Ansteuerung des Ventils kann daher das Arbeitsvolumen mit einem Hochdruck beaufschlagt und hierdurch der Kolben des Hydraulikzylinders bewegt werden.

Gemäß einer Weiterbildung des vorstehend beschriebenen Aktuators ist dieser so ausgestaltet, daß wahlweise das Arbeitsvolumen über das genannte Ventil mit einem Niederdruckreservoir und das Komplementärvolumen mit einem Hochdruckreservoir gekoppelt werden kann. Vorzugsweise handelt es sich bei dem Hochdruckreservoir und dem Niederdruckreservoir um die bereits erwähnten Reservoire. Durch die Möglichkeit, auch das Komplementärvolumen wahlweise an ein Hochdruckreservoir anzuschließen, wird ein doppelt (zweiseitig) wirkender Hydraulikzylinder geschaffen, welcher ohne zusätzliche Hilfsmittel für die Rückstellung des Kolbens auskommt.

Bei der Ausgestaltung des Aktuators als Hydraulikzylinder können weiterhin das Arbeitsvolumen und/oder das Komplementärvolumen über Drosseln dauerhaft mit einem Niederdruckreservoir und/oder miteinander verbunden sein. Über die Drosseln kann dann ein zeitlich verzögerter Druckausgleich stattfinden.

Optional können die Drosseln verstellbar sein, so daß die Drosselcharakteristik nach Bedarf eingestellt werden kann. Insbesondere kann der Drosselkoeffizient dann entsprechend dem Betriebspunkt des Simulationssystems festgelegt werden.

Die beschriebene Vorrichtung kann ferner durch eine oder mehrere Einrichtungen zur passiven Simulation eines Pedalverhaltens ergänzt werden. Solche Einrichtungen üben auf das Pedal eine von der Pedalposition, der Pedalgeschwindigkeit und/oder der Pedalbeschleunigung abhängige Kraft aus, welche der Fahrer als Gegenkraft zur Pedalkraft spürt. Die passiven Einrichtungen können somit einen Grundanteil der Simulation eines Betätigungsverhaltens übernehmen, wobei die Feinabstimmung zur Erzeugung eines speziellen Verhaltens von dem erläuterten aktiven Regelungssystem übemommen wird.

Die Erfindung betrifft weiterhin ein Verfahren zur Simulation eines vorgegebenen Betätigungsverhaltens eines Pedals ("Pedalgefühl") durch Verstellen der Pedalposition, wobei die Pedalposition sensorisch erfaßt wird. Das Verfahren sieht vor, daß
- die vom Fahrer auf das Pedal ausgeübte Pedalkraft ermittelt wird;
- eine von der genannten Pedalkraft gemäß dem gewünschten Betätigungsverhalten des Pedals abhängige Sollposition des Pedals bestimmt wird; und
- die genannte Sollposition des Pedals in einer rückgekoppelten Regelungsschleife eingestellt wird.

Das Verfahren kann insbesondere mit Hilfe der zuvor erläuterten Vorrichtung ausgeführt und entsprechend den Weiterbildungen der Vorrichtung variiert werden.

Gemäß dem Verfahrens werden die Pedalbeschleunigung und die vom Pedal weitergeleitete Kraft gemessen, und es wird die vom Fahrer auf das Pedal ausgeübte Pedalkraft unter Berücksichtigung dieser Messwerte (weitergeleitete Kraft, Pedalbeschleunigung) ermittelt. Durch die Berücksichtigung der Pedalbeschleunigung ist auch in dynamischen Situationen, d. h. bei bewegtem Pedal, eine sehr genaue Ermittlung der Pedalkraft möglich, da die Pedalbeschleunigung Rückschlüsse auf in der Pedalkraft enthaltene Massenträgheitskräfte erlaubt.

Im Folgenden wird die Erfindung mit Hilfe der Figuren beispielhaft näher erläutert. Es zeigen:
- Fig. 1: schematisch die Komponenten einer erfindungsgemäßen Simutationsvorrichtung mit einem doppelt wirkenden Hydraulikzylinder und
- Fig. 2: eine alternative Ausgestaltung der Vorrichtung mit einem einfach wirkenden Hydraulikzylinder.

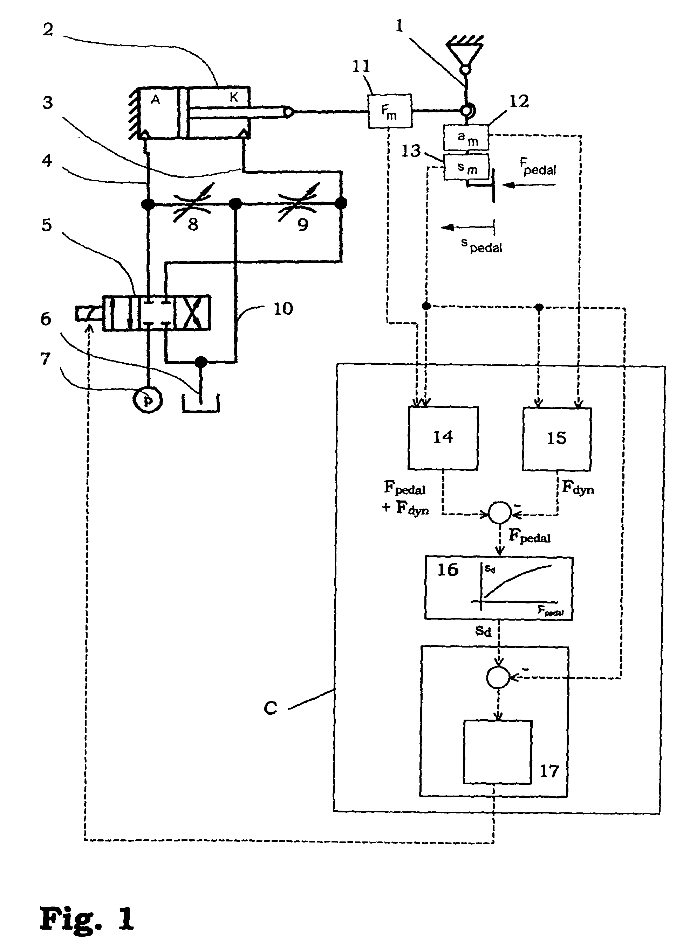

In Figur 1 ist schematisch ein Fußpedal 1 dargestellt, bei dem es sich insbesondere um das Bremspedal oder das Gaspedal eines Kraftfahrzeuges handeln kann. Das Pedal ist schwenkbar um eine Achse am Kraftfahrzeug angebracht und weist eine Pedalplatte auf, auf welche der Fahrer die Pedalkraft F_{pedal} ausüben kann. Als Reaktion auf diese Krafteinwirkung kann sich das Pedal 1 um die Schwenkachse bewegen, wodurch die Pedalplatte zur Position S_{pedal} ausgelenkt wird.

Das vom Fahrer bei der Betätigung des Pedals 1 wahrgenommene Pedalgefühl wird durch den Zusammenhang der Größen Pedalweg S_{pedal} und Pedalkraft F_{pedal} bestimmt. Da bei modernen Kraftfahrzeugen die durch das Pedal vorgenommenen Steuerungen in der Regel von aktiven Einheiten - wie z. B. einem Bremskraftverstärker - ausgeführt oder unterstützt werden, geht der bei einem rein mechanischen Pedal vorhandene Wirkzusammenhang zwischen Pedalkraft und verursachter Funktionssteuerung weitgehend verloren.

Um dem Fahrer das vertraute Gefühl bei der Betätigung des Pedals 1 wieder zu vermitteln, ist bei der erfindungsgemäßen Vorrichtung das Pedal 1 mit dem Kolben eines Hydraulikzylinders 2 gekoppelt, so daß durch eine entsprechende Ansteuerung des Hydraulikzylinders 2 eine Kraft auf das Pedal 1 ausgeübt und dessen Position verstellt werden kann. Dabei wird der Hydraulikzylinder 2 wie unten beschrieben so geregelt, daß ein gewünschter Zusammenhang zwischen Pedalweg S_{pedal} und Pedalkraft F_{pedal} entsteht.

Der Hydraulikzylinder 2 wird durch den Kolben in ein Arbeitsvolumen A und ein Komplementärvolumen K unterteilt. Das Arbeitsvolumen A kann über eine Zuleitung 4 und das Komplementärvolumen über eine Zuleitung 3 mit Hydraulikmedium beaufschlagt werden. Ein an diese Zuleitungen 3, 4 gekoppeltes elektromagnetisches Servoventil 5 kann diesbezüglich so angesteuert werden, daß
- das Arbeitsvolumen A mit einem Hochdruckreservoir 7 und das Komplementärvolumen K mit einem Niederdruckreservoir 6 verbunden wird, oder
- das Arbeitsvolumen A mit dem Niedrigdruckreservoir 6 und das Komplementärvolumen K mit dem Hochdruckreservoir 7 verbunden wird, oder
- Arbeitsvolumen A und Komplementärvolumen K mit keinem der Druckreservoire verbunden werden.

Da sowohl das Arbeitsvolumen A als auch das Komplementärvolumen K (gegensinnig) mit Hochdruck beziehungsweise Niedrigdruck beaufschlagt werden können, handelt es sich um einen doppelt wirkenden Hydraulikzylinder 2.

Wie aus Figur 1 ferner erkennbar ist, sind die Zuleitungen 3 und 4 zum Komplementärvolumen K beziehungsweise Arbeitsvolumen A über jeweils einen hydraulischen Knotenpunkt und jeweils eine hydraulische Drossel 9 beziehungsweise 8 mit dem Niederdruckreservoir 6 verbunden. Über die Drosseln 8 und 9 wird mit einer entsprechenden zeitlichen Verzögerung stets ein Druckausgleich in Richtung des niedrigeren Druckes erzeugt. Vorzugsweise sind die Drosseln 8 und 9 dabei manuell oder elektrisch verstellbar, wobei es im letztgenannten Fall möglich ist, den Drosselkoeffizienten dem Betriebspunkt der Pedalgefühlssimulation anzupassen.

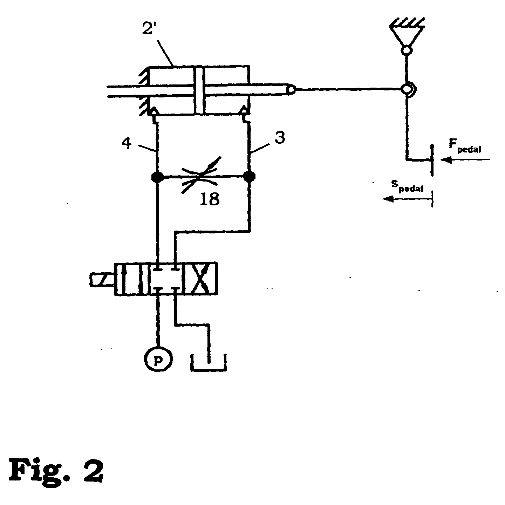

Figur 2 zeigt eine Variante der bis hierher beschriebenen Vorrichtung, welche mit einem einfach wirkenden Hydraulikzylinder 2' arbeitet. Weiterhin ist bei dieser Variante im Unterschied zu Figur 1 nur eine Drossel 18 vorgesehen, welche die Zuleitungen 4 und 3 zum Arbeitsvolumen A beziehungsweise Komplementärvolumen K miteinander verbindet. Eine Verbindung mit dem Niederdruckreservoir entfällt daher. Die Drossel 18 kann wie in Figur 2 dargestellt extern angeordnet sein, sie könnte jedoch auch intern in den Kolben des Hydraulikzylinders 2' integriert sein.

Zurückkommend auf Figur 1 wird nunmehr die Regelung des Hydraulikzylinders 2 beschrieben, welche das gewünschte Pedalverhalten simuliert (entsprechende Ausführungen gelten natürlich auch für den Hydraulikzylinder 2' von Figur 2). Diesbezüglich sei zunächst auf einen Kraftaufnehmer 11 in der Kopplung zwischen Pedal 1 und Kolben des Hydraulikzylinders 2 sowie auf einen Beschleunigungssensor 12 und einen Wegaufnehmer 13 (Positionssensor) am Pedal 1 hingewiesen. Die vom Kraftaufnehmer 11 gemessene Kraft Fₘ, die vom Beschleunigungssensor 12 gemessene Beschleunigung aₘ und die vom Wegaufnehmer 13 gemessene Position sₘ des Pedals werden als Eingangssignale an ein Regelungssystem C geleitet. Letzteres kann zum Beispiel mit Hilfe eines Mikrocontrollers realisiert sein.

Im Regelungssystem C werden die gemessene Kraft Fₘ und die Pedalposition Sₘ in einem ersten Block 14 gemäß einem ersten Algorithmus verarbeitet, um hieraus die Pedalkraft F_{pedal} zuzüglich einer dynamischen Kraftkomponente F_{dyn} zu berechnen. Die dynamische Kraft F_{dyn} wird durch Massenträgheitseffekte des Pedalmechanismus bewirkt. Bei geringer Dynamik kann diese vernachlässigt werden, und aus der Kinematik des Pedalmechanismus, die aus dem Pedalweg sₘ errechnet wird, und der gemessenen Kraft Fₘ kann in guter Näherung auf die Pedalkraft F_{pedal} rückgerechnet werden. Dies gelingt jedoch nicht bei hoher Stelldynamik, da die Trägheitskraft F_{dyn} des Pedalmechanismus dann deutlich zunimmt. F_{dyn} wird daher in einem zweiten Block 15 aus den Eingangsgrößen der Pedalbeschleunigung aₘ und der gemessenen Pedalposition sₘ errechnet. Dies kann z. B. mit Hilfe von abgespeicherten Kennlinien geschehen. Der ermittelte Wert von F_{dyn} kann dann von dem Ausgang des Blockes 14 subtrahiert werden, um die gesuchte Pedalkraft F_{pedal} zu bestimmen.

Im nachfolgenden Block 16 des Regelungssystems C wird die ermittelte Pedalkraft F_{pedal} als Eingang verwendet, um hieraus die Sollposition s_{d} des Pedals 1 gemäß einem gewünschten Betätigungsverhalten zu berechnen. Im Block 16 ist somit die gewünschte und im Prinzip frei vorgebbare Pedalcharakteristik als Kraft-Positions-Kurve implementiert.

Die Sollposition s_{d} stellt sodann die Führungsgröße für einen nachgeschalteten elektrohydraulischen Lageregelkreis dar. Im zugehörigen Regelungsblock 17 wird zunächst die Regelabweichung S_{d} - Sₘ zwischen der Sollposition und der gemessenen Pedalposition berechnet. Aus dieser Regelabweichung wird dann nach einem Regelungsalgorithmus wie etwa einem Proportional-Integral-Differential-Algorithmus eine geeignete Stellgröße zur Ansteuerung des Servoventils 5 berechnet und an Letzteres weitergeleitet. Über die dadurch ausgelöste Einstellung des Servoventils 5 wird der Hydraulikzylinder 2 derart mit Druck beaufschlagt, daß er das angekoppelte Pedal 1 in Richtung der gewünschten Sollposition s_{d} bewegt.

Die beschriebene aktive Simulationsvorrichtung kann mit passiven Pedalgefühlssimulatoren kombiniert werden. Unter einem passiven Pedalgefühlssimulator wird dabei eine Vorrichtung verstanden, bei der ein bestimmtes Pedalgefühl mit ausschließlich passiven Elementen, denen von außen keine Energie zugeführt wird, realisiert wird.

Die Figuren zeigen demnach ein Beispiel für einen erfindungsgemäßen elektrohydraulischen Pedalgefühlssimulator, welcher bei allen Arten von Kraftfahrzeugen einsetzbar ist. Die Verstellung des Pedalwinkels beziehungsweise der Pedalposition erfolgt bei diesem Simulator durch eine elektrohydraulische Servoeinheit, die Teil eines Lageregelkreises ist. Die Führungsgröße des Regelkreises ist die Pedalposition s_{d}, die aus der Pedalkraft F_{pedal} und geeigneten mathematischen Algorithmen errechnet wird. Da die Algorithmen in ihrer Struktur und ihren Parametern frei wählbar sind, können unterschiedliche Pedalgefühle mit der Vorrichtung dargestellt werden. Die Ermittlung der Pedalkraft F_{pedal} erfolgt durch einen in der Koppelstange zwischen Hydraulikzylinder und Pedal angeordneten Kraftaufnehmer 11, wobei störende dynamische Kräfte durch eine zusätzliche Messung der Pedalbeschleunigung am rechnerisch eliminiert werden können.

## Patentansprüche

1. Vorrichtung zur Simulation eines vorgegebenen Betätigungsverhaltens eines Pedals (1), enthaltend einen Aktuator (2, 2'), mit welchem das Pedal (1) bewegt werden kann, sowie einen Positionssensor (13) für die Position des Pedals und einen Regler (17), welcher mit dem Aktuator (2, 2') gekoppelt und dahingehend ausgebildet ist, die Position des Pedals (1) einer Sollposition nachzuführen,
**dadurch gekennzeichnet, daß**
die Vorrichtung folgende Einrichtungen enthält:
- einen Kraftaufnehmer (11) zur Bestimmung der vom Pedal weitergeleiteten Kräft (Fₘ) und
- einen Beschleunigungssensor (12) zur Messung der Pedalbeschleunigung (aₘ)

2. Vorrichtung nach Anspruch 1,
**dadurch gekennzeichnet, daß**
der Kraftaufnehmer (11) in dem Kopplungsglied zwischen Aktuator (2) und Pedal (1) angeordnet ist.

3. Vorrichtung nach Anspruch 1 oder 2,
**dadurch gekennzeichnet, daß**
der Aktuator einen Hydraulikzylinder (2, 2') mit einem Arbeitsvolumen (A) und einem Komplementärvolumen (K) umfaßt, und daß das Arbeitsvolumen über ein Ventil (5) wahlweise mit einem Hochdruckreservoir (7) gekoppelt werden kann, während das Komplementärvolumen mit einem Niederdruckreservoir (6) gekoppelt ist.

4. Vorrichtung nach Anspruch 3,
**dadurch gekennzeichnet, daß**
wahlweise das Arbeitsvolumen (A) über das Ventil (5) mit einem Niederdruckreservoir (6) und das Komplementärvolumen (K) mit einem Hochdruckreservoir (7) gekoppelt werden kann.

5. Vorrichtung nach Anspruch 4,
**dadurch gekennzeichnet, daß**
das Arbeitsvolumen (A) und/oder das Komplementärvolumen (K) über Drosseln (8, 9, 18) mit einem Niederdruckreservoir (6) und/oder miteinander verbunden sind.

6. Vorrichtung nach Anspruch 5,
**dadurch gekennzeichnet, daß**
die Drosseln (8, 9, 18) verstellbar sind.

7. Vorrichtung nach mindestens einem der Ansprüche 1 bis 6,
adurch **gekennzeichnet**, daß
diese mit einer Einrichtung zur passiven Pedalverhaltenssimulation gekoppelt ist.

8. Verfahren zur Simulation eines vorgegebenen Betätigungsverhaltens eines Pedals (1) durch Verstellen der Pedalposition, wobei die Pedalposition sensorisch erfaßt und eingeregelt wird,
**dadurch gekennzeichnet, daß**
die Pedalbeschleunigung (aₘ) und die vom Pedal weitergeleitete Kraft (Fₘ) gemessen und die Pedalkraft (F_{pedal}) unter Berücksichtigung dieser Größen sowie der Pedalposition (sₘ) ermittelt wird ;
eine von der Pedalkraft (F_{pedal}) abhängige Sollposition (s_{d}) des Pedals (1) bestimmt wird;
die Sollposition (s_{d}) des Pedals in einer rückgekoppelten Regelungsschleife eingestellt wird.

## Claims

1. Apparatus for simulating a predetermined actuating behaviour of a pedal (1), containing an actuator (2, 2') with which the pedal (1) can be moved, and a position sensor (13) for the position of the pedal and a regulator (17) which is coupled to the actuator (2, 2') and is designed to the effect that the position of the pedal (1) has to track a desired position, **characterized in that** the apparatus contains the following devices:
- a force transducer (11) for determining the force (Fₘ) passed on by the pedal and
- an acceleration sensor (12) for measuring the pedal acceleration (aₘ).

2. Apparatus according to Claim 1, **characterized in that** the force transducer (11) is arranged in the coupling element between the actuator (2) and the pedal (1).

3. Apparatus according to Claim 1 or 2, **characterized in that** the actuator comprises a hydraulic cylinder (2, 2') with a working volume (A) and a complementary volume (K), and **in that** the working volume can optionally be coupled to a high-pressure reservoir (7) via a valve (5) while the complementary volume is coupled to a low-pressure reservoir (6).

4. Apparatus according to Claim 3, **characterized in that** the working volume (A) can optionally be connected to a low-pressure reservoir (6) via the valve (5) and the complementary volume (K) can be coupled to a high-pressure reservoir (7).

5. Apparatus according to Claim 4, **characterized in that** the working volume (A) and/or the complementary volume (K) are connected to a low-pressure reservoir (6) and/or to each other via throttles (8, 9, 18).

6. Apparatus according to Claim 5, **characterized in that** the throttles (8, 9, 18) are adjustable.

7. Apparatus according to at least one of Claims 1 to 6, **characterized in that** it is coupled to a device for passively simulating the pedal behaviour.

8. Method for simulating a predetermined actuating behaviour of a pedal (1) by adjusting the pedal position, the pedal position being detected and adjusted by sensors, **characterized in that** the pedal acceleration (aₘ) and the force (Fₘ) passed on by the pedal are measured, and the pedal force (F_{pedal}) is determined taking these variables and the pedal position (sₘ) into consideration;
a desired position (s_{d}) of the pedal (1) which is dependent on the pedal force and (F_{pedal}) is determined;
the desired position (s_{d}) of the pedal is set in a feedback regulating loop.

## Revendications

1. Dispositif de simulation d'une caractéristique d'actionnement prédéfinie d'une pédale (1), contenant un actionneur (2, 2'), avec lequel la pédale (1) peut être déplacée, ainsi qu'un capteur de position (13) pour la position de la pédale et un régulateur (17), qui est couplé à l'actionneur (2, 2') et est réalisé de manière à faire suivre une position de consigne à la position d'une pédale (1),
**caractérisé en ce que**
le dispositif contient les éléments suivants :
- un transducteur de force (11) pour déterminer la force (Fₘ) transmise par la pédale et
- un capteur d'accélération (12) pour mesurer l'accélération de la pédale (aₘ).

2. Dispositif selon la revendication 1,
**caractérisé en ce que**
le transducteur de force (11) est disposé dans l'organe d'accouplement entre l'actionneur (2) et la pédale (1).

3. Dispositif selon la revendication 1 ou 2,
**caractérisé en ce que**
l'actionneur comprend un cylindre hydraulique (2, 2') avec un volume de travail (A) et un volume complémentaire (K), et **en ce que** le volume de travail peut être accouplé par le biais d'une soupape (5) de manière sélective à un réservoir à haute pression (7), tandis que le volume complémentaire est accouplé à un réservoir à basse pression (6).

4. Dispositif selon la revendication 3,
**caractérisé en ce que**
le volume de travail (A) peut être accouplé de manière sélective à un réservoir à basse pression (6) et le volume complémentaire (K) à un réservoir à haute pression (7).

5. Dispositif selon la revendication 4,
**caractérisé en ce que**
le volume de travail (A) et/ou le volume complémentaire (K) sont connectés par le biais d'étranglements (8, 9, 18) à un réservoir à basse pression (6) et/ou l'un à l'autre.

6. Dispositif selon la revendication 5,
**caractérisé en ce que**
les étranglements (8, 9, 18) sont réglables.

7. Dispositif selon l'une quelconque des revendications 1 à 6,
**caractérisé en ce que**
celui-ci est accouplé à un élément de simulation passive de la caractéristique d'une pédale.

8. Procédé de simulation d'une caractéristique d'actionnement prédéfinie d'une pédale (1) par réglage de la position de la pédale, la position de la pédale étant détectée par des capteurs et étant ajustée,
**caractérisé en ce que**
l'accélération de la pédale (aₘ) et la force (Kₘ) transmise par la pédale sont mesurées et la force de la pédale (F_{pedal}) est détectée en tenant compte
de ces valeurs ainsi que de la position de la pédale (sₘ) ;
une position de consigne (S_{d}) de la pédale (1) dépendant de la force de la pédale (F_{pedal}) est déterminée ;
et la position de consigne (S_{d}) de la pédale est ajustée dans une boucle de réglage à contre-réaction.
